# EUROPEAN PATENT SPECIFICATION

(11) **EP 4 357 625 B1**
(45) Date of publication and mention of the grant of the patent: **08.07.2026**
(21) Application number: 23203696.2
(22) Date of filing: 16.10.2023
(51) Int. Cl.: F16B 2/08, F16B 5/12, F16B 21/08

(54) **MODULAR SYSTEM FOR AFFIXING AT LEAST ONE ELEMENT TO A VEHICLE AND/OR FOR AFFIXING THE MODULAR SYSTEM TO THE VEHICLE**
MODULARES SYSTEM ZUR BEFESTIGUNG MINDESTENS EINES ELEMENTS AN EINEM FAHRZEUG UND/ODER ZUR BEFESTIGUNG DES MODULAREN SYSTEMS AN DEM FAHRZEUG
SYSTÈME MODULAIRE POUR FIXER AU MOINS UN ÉLÉMENT À UN VÉHICULE ET/OU POUR FIXER LE SYSTÈME MODULAIRE AU VÉHICULE

(30) Priority: 17.10.2022 DE 102022127136
(43) Date of publication of application: 24.04.2024
(73) Proprietor: A. Raymond et Cie, 38000 Grenoble (FR)
(72) Inventor: JELINEK, Martin, 460 06 Liberec 6 (CZ); KARAFIAT, Tomas, 466 02 Jablonec nad Nisou (CZ)
(74) Representative: Hoffmann Eitle

(56) References cited:
- DE-C2- 2 624 333
- KR-B1- 100 440 857
- KR-U- 19980 068 315
- US-A- 4 244 542
- US-A1- 2017 066 578

## Description

The present invention relates to a modular system for affixing at least one element to a vehicle and/or for affixing the modular system to the vehicle, a method for assembling a modular system and a use of a modular system.

A modular system for affixing at least one element to a vehicle and/or affixing the modular system to the vehicle is known from KR 1998 0068315 U.

DE 20 2012 007 485 U1 describes a cable tie with a locking strap of rectangular cross-section, the front side of which has a surface with a roof tile-like structure and the rear side of which has a smooth surface, a cylindrical head, with the counterpart a separate cylindrical binding head, the opening of which is equipped with a locking pawl, wherein the fastening strap has a cylindrical head that serves as a stop.

The present invention is defined in claim 1. Distinct embodiments are defined in the dependent claims.

A modular system for affixing at least one element to a vehicle and/or for affixing the modular system to the vehicle can be used to affix at least one element to a vehicle and/or to affix the modular system to the vehicle. Therefore, the modular system comprises at least one component configured to affix the at least one element to a vehicle and/or configured to affix the modular system to the vehicle. In a vehicle are a variety of elements that are needed to conduct for example electricity, pressure and fluids like fuel and oil. The elements can have various shapes and sizes.

The elements form a complex system which is needed for the proper function of the vehicle. The elements must be arranged in the vehicle without disturbing the driver and the passengers of the vehicle. At the same time, the elements must be securely affixed to prevent loosening while driving. While driving the at least one component must affix the at least one element despite the vibrations.

In addition, the complex system of elements varies since at certain places a large number of elements must be affixed, while at other places merely a small number of elements must be affixed. Hence, the modular system should be adaptable to the number of present elements. The places where the elements should be affixed vary, too, since the place to affix the elements could be a stud, a plate, or a hole. Hence, the modular system should also be adaptable to the different mounting options.

Further, the assembly of the modular system should be kept simple to avoid unnecessary cost during production and during assembly of the vehicle.

Based on this prior art it is an object of the present invention to provide a modular system for affixing at least one element to a vehicle and/or for affixing the modular system to the vehicle, which provides a simple assembly and a good mounting of the elements despite vibrations, while at the same time is adaptable to different elements, to different amounts of elements and to the different mounting options in a vehicle.

The above-mentioned object is solved by a modular system for affixing at least one element to a vehicle and/or for affixing the modular system to the vehicle, comprising: a threading element, a stop element, at least one component configured to affix the at least one element to a vehicle and/or configured to affix the modular system to the vehicle, wherein the threading element comprises a strip and a limiting element, wherein the at least one component is configured to be attached to the strip in an assembled state, wherein the limiting element is configured to be attached to the strip in the assembled state, wherein the at least one component is configured to be clamped between the limiting element and the stop element in the assembled state.

The modular system can be used for affixing at least one tube, at least one wire and/or at least one wire bundle to a vehicle. The modular system can be used for affixing the modular system to a stud, a plate, a tube, a surface, in particular by tape, and/or a hole of the vehicle. A vehicle can be a land vehicle, in particular a car.

The at least one element can be at least one tube, at least one wire and/or at least one wire bundle.

The stop element can be configured to prevent a movement of the at least one component when the at least one component is clamped between the limiting element and the stop element in the assembled state. The stop element can be arranged at the at least one component. The at least one component can comprise the stop element.

The threading element can be the main component of the modular system. The threading element can be the basic structure of the modular system. A strip can be elongated, wherein the longitudinal axis can be at least 10 times longer than any other axis, preferably at least 20 times longer than any other axis.

The limiting element can be a stop element. The strip and the limiting element can be monolithic or can be two separate parts. The limiting element can be arranged at the at least one component. The at least one component can comprise the limiting element.

Attached can mean that the at least one component and the stop element can be in contact with the threading element. Attached can mean that the at least one component and the stop element can be connected to the threading element by a form-locked connection.

Clamped can mean that the stop element and the limiting element can apply a force onto the at least one component, wherein in particular the at least one component can be compressed by the stop element and the limiting element. Clamped can mean that the at least one component cannot move along the clamping direction The clamping direction can be the axis from the stop element to the limiting element through the at least one component. Clamped can mean that the at least one component cannot move at all.

The assembled state can be the state, when the at least one component and the stop element can be attached to the strip and when the at least one component can be clamped between the limiting element and the stop element.

The at least one component can exhibit any geometry and shape to affix the at least one element to a vehicle. The modular system can comprise at least two components. The first of the at least two components can be configured to affix the at least one element to a vehicle while the second of the at least two components can be configured to affix the modular system to the vehicle. The at least one modular system can comprise a spacer. A spacer can be configured to be arranged in between at least two components. A spacer can be configured to bridge a gap between at least two elements. The at least one component can be designed to bridge a gap between at least two elements. The at least one component can be configured to be affixed to a stud, a plate, or a hole.

The threading element, the stop element, the at least one component and/or the spacer can comprise polyamide 66 or polybutylene terephthalate.

In this way, the modular system provides a simple assembly and a good mounting of the elements despite vibrations. In addition, the modular system is adaptable to different elements, to different amounts of elements and to the different mounting options in a vehicle.

The modular system for affixing at least one element to a vehicle and/or for affixing the modular system to the vehicle, can comprise a threading element, a stop element, at least one component to affix the at least one element to a vehicle and/or to affix the modular system to the vehicle, wherein the threading element can comprise a strip and a limiting element, wherein the at least one component can be attached to the strip in an assembled state, wherein the limiting element can be attached to the strip in the assembled state, wherein the at least one component can be clamped between the limiting element and the stop element in the assembled state.

In an embodiment the at least one component can be stringed onto the strip and/or the stop element is stringed onto the strip.

Stringed onto can mean that the strip can be at least partially surrounded by at least a part of the at least one component and/or by at least a part of the stop element. Partially surrounded means that the strip can be completely surrounded by the surrounding material of the at least one component and/or the stop element or the surrounding material of the at least one component and/or the stop element exhibits a gap. In this way, the modular system provides a simple assembly and a good mounting of the elements despite vibrations.

In an embodiment the at least one component can comprise an opening to string through the strip and/or the stop element can comprise an opening to string through the strip.

An opening can be any opening in the at least one component and/or the stop element through which the strip can be guided. Hereby, an incorrect loosening can be prevented, so that a good mounting of the elements despite vibrations can be provided. Further, the assembly of the modular system is simplified.

In an embodiment the strip can comprise at least one elevation and the stop element can comprise a locking element, wherein the locking element can be configured to permit a movement of the stop element over the at least one elevation in a first direction along the longitudinal axis of the strip, wherein the locking element can be configured to prevent a movement of the stop element over the at least one elevation in a direction opposite to the first direction along the longitudinal axis of the strip.

The at least one elevation can extend transversely, in particular perpendicular, to the longitudinal axis of the strip. The at least one elevation can have a height to interact with the locking element but not to interact with the at least one component.

The at least one locking element can be a plate. A movement can be a shift of the stop element due to vibrations during the ride of the vehicle. A movement can especially be a movement along the longitudinal axis of the strip over the at least one elevation.

In this way, a loosening due to vibrations can be prevented, so that a good mounting of the elements despite vibrations can be provided.

In an embodiment the threading element and the stop element can form a cable tie. In this way, a good mounting of the elements despite vibrations can be provided, while at the same time the assembly can be simplified.

In an embodiment the stop element can comprise at least one tension element, wherein the at least one tension element can be configured to apply a pressure to the at least one component in the assembled state.

The tension element can comprise a flexible material and/ or comprise a flexible geometry like a spring or a springy plate. In this way, tension can be inserted into the modular system to compensate elastic deformation and tolerances of the modular system. The tension element can be a wing attached to the surface of the stop element, wherein the wing can protrude over the stop element in the direction in which the stop element is arranged and/or stringed onto the strip.

Thus, the stability of the modular system can be increased so that the at least one element can be affixed despite vibrations.

In an embodiment the at least one tension element and the stop element can be monolithic. Monolithic can mean that the at least one tension element and the stop element can be in one piece. As a result, the at least one tension element and the stop element can be easy to produce.

Alternatively, the at least one tension element and the stop element can be two parts. In doing so, the flexibility during the assembly can be increased and thus the assembly is simplified.

According to the present invention, the at least one component comprises at least one stabilisation system configured to stabilize numerous components in the assembled state.

A stabilization system can mean any configuration to increase the stabilization of the modular system and the numerous components for example by increasing the stiffness of the modular system, by increasing the connection of the numerous components and/or by fixation of the arrangement of the numerous components. The at least one stabilization system can be a connection mean like glue, a support structure and/or a stabilizing material. The at least one stabilization system can have any geometric shape.

Due to that, a good mounting of the elements by the modular system despite vibrations can be provided.

According to the present invention, the at least one stabilisation system comprises at least one female plug and at least one male plug, wherein in particular the at least one female plug and the at least one male plug can be arranged on opposite sides of the at least one component.

A female plug can be a depression. A male plug can be an elevation. The at least one male plug can be configured to fit into the at least one female plug. The at least one male plug and/or the at least one female plug can be arranged on the at least one component. The at least one female plug and/or the at least one male plug can be arranged on one plane of the at least one component.

As a result, the assembly is simplified and a good mounting of the elements despite vibrations is provided.

In an embodiment the threading element can comprise glass fibres. The threading element can comprise 5 - 80 vol.-% (percent by volume), preferably 10 - 70 vol.-% and most preferably 20 - 50 vol-% glass fibres. The length of the glass fibres can be 0,1 - 15 mm, preferably 0,1 - 10 mm and most preferably 0,1 - 3 mm.

In doing so, the toughness of the threading element can be increased. Thus, the modular system can be more durable, so that a good mounting of the elements despite vibrations is provided.

The threading element comprises a strip and a limiting element.

The threading element can be the main component of the modular system. The threading element can be the basic structure of the modular system. A strip can be elongated, wherein the longitudinal axis can be at least 10 times longer than any other axis, preferably at least 20 times longer than any other axis.

The limiting element can be a stop element. The strip and the limiting element can be monolithic or can be two separate parts. The limiting element can be arranged at one of the at least one component. The at least one component can comprise the limiting element

The stop element can be configured to prevent a movement of the at least one component when the at least one component is clamped between the limiting element and the stop element in the assembled state. The stop element can be arranged at one of the at least one component. The at least one component can comprise the stop element.

The at least one component can exhibit any geometry and shape to affix the at least one element to a vehicle.

According to another aspect of the invention the above-mentioned object is solved by a method for assembling a modular system for affixing at least one element to a vehicle and/or for affixing the modular system to the vehicle, in particular a modular system according to the invention, comprising the steps:
- providing a threading element, wherein the threading element comprises a strip and a limiting element
- providing at least one component for affixing at least one element to a vehicle and/or for affixing the modular system to the vehicle,
- attaching the at least one component comprising at least one stabilization system configured to stabilize numerous components in the assembled state to the strip, the stabilization system comprising at least one female plug and at least one male plug,
- providing a stop element,
- attaching the limiting element to the strip,
- clamping the at least one component between the limiting element and the stop element.

The same advantages are achieved by the method as with the modular system.

According to another aspect of the invention the above-mentioned object is solved by a use of a modular system according to any one of claims 1 to 9 for affixing at least one element to a vehicle and/or for affixing the modular system to the vehicle, in particular of tubes of a brake system, a fuel system and/or a thermal management system.

The same advantages are achieved by the use as with the modular system.

The invention will now be particularly described with reference to the accompanying drawings.
- Fig. 1: shows a schematic view of a modular system;
- Fig. 2: shows a schematic view of a modular system;
- Fig. 3: shows a component;
- Fig. 4: shows a stop element; and
- Fig. 5: shows a threading element;
- Fig. 6: shows a component;
- Fig. 7: shows a component;
- Fig. 8: shows a component.

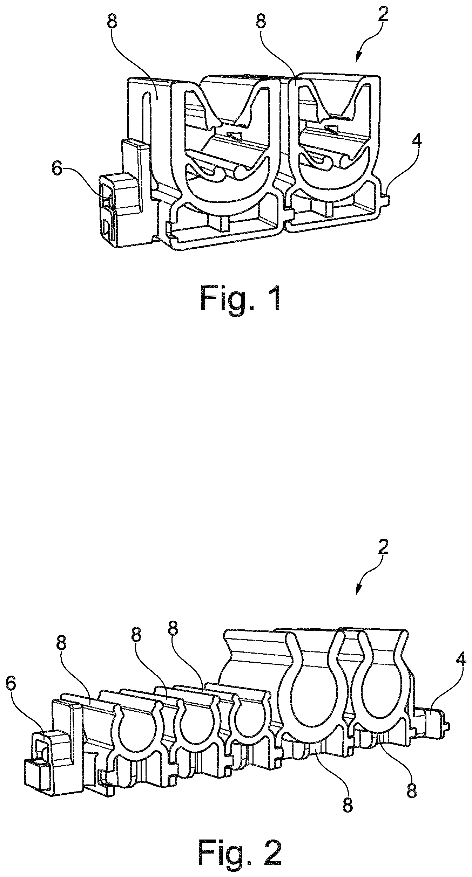

Fig. 1 shows a schematic view of a modular system 2 in the assembled state. The modular system 2 for affixing at least one element to a vehicle and/or for affixing the modular system 2 to the vehicle comprises a threading element 4, a stop element 6, and two components 8 configured to affix the at least one element to a vehicle and/or configured to affix the modular system 2 to the vehicle. The threading element 4 comprises a strip 10 and a limiting element 12. The two components 8 are attached to the strip 10 in the assembled state. The limiting element 12 is attached to the strip 10 in the assembled state. The two components 8 are clamped between the limiting element 12 and the stop element 6 in the assembled state.

Fig. 2 shows a schematic view of a modular system. The modular system 2 for affixing at least one element to a vehicle and/or for affixing the modular system 2 to the vehicle comprises a threading element 4, a stop element 6, and five components 8 configured to affix the at least one element to a vehicle and/or configured to affix the modular system 2 to the vehicle. The threading element 4 comprises a strip 10 and a limiting element 12. The five components 8 are attached to the strip 10 in the assembled state. The limiting element 12 is attached to the strip 10 in the assembled state. The five components 8 are clamped between the limiting element 12 and the stop element 6 in the assembled state.

The at least one component 8 is stringed onto the strip 10 and the stop element 6 is stringed onto the strip 10.

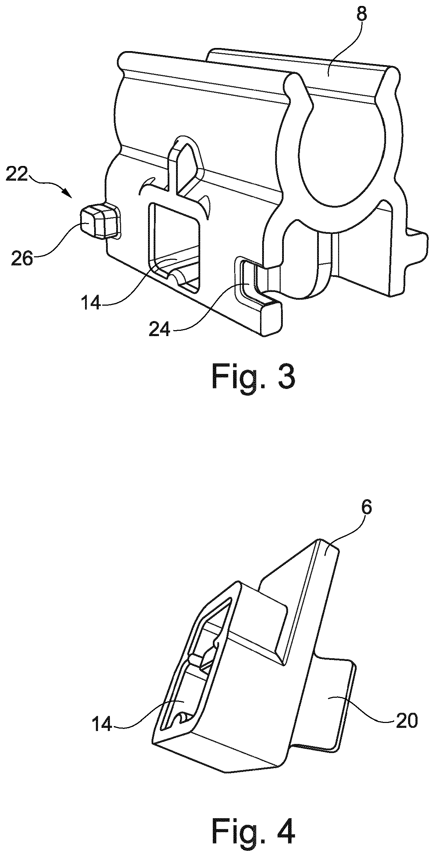

As can be seen in Fig. 3 and Fig. 4 the component 8 comprises an opening 14 to string through the strip 10 and the stop element 6 comprises an opening 14 to string through the strip 10.

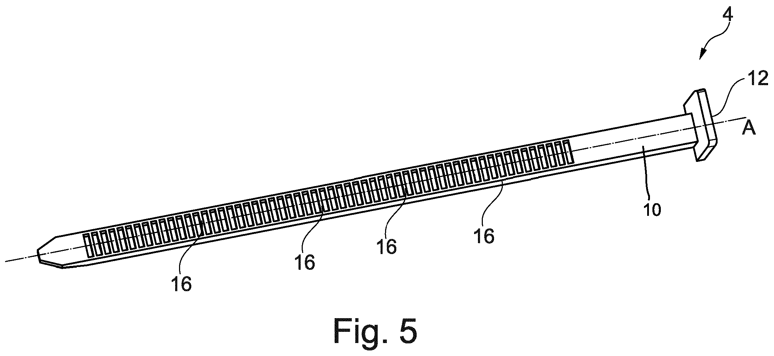

Fig. 5 shows a threading element 4. The threading element 4 comprises a strip 10 and a limiting element 12. The threading element 4 comprises glass fibres. The strip 10 comprises numerous elevations 16 and the stop element 6 comprises a locking element 18.

The locking element 18 is configured to permit a movement of the stop element 6 over the at least one elevation 16 in a first direction along the longitudinal axis A of the strip 10, wherein the locking element 18 is configured to prevent a movement of the stop element 6 over the at least one elevation 16 in a direction opposite to the first direction along the longitudinal axis of the strip 10.

As shown in Fig. 5 the threading element 4 and the stop element 6 form a cable tie.

As shown in Fig. 4 the stop element 6 comprises a tension element 20, wherein the at least one tension element 20 is configured to apply a pressure to the at least one component 8 in the assembled state. The tension element 20 and the stop element 6 are monolithic.

As shown in Fig. 3 the component 8 comprises a stabilisation system 22 configured to stabilize numerous components 8 in the assembled state. The stabilisation system 22 comprises a female plug 24 and a male plug 26. The female plug 24 and the male plug 26 are arranged on opposite sides of the component 8.

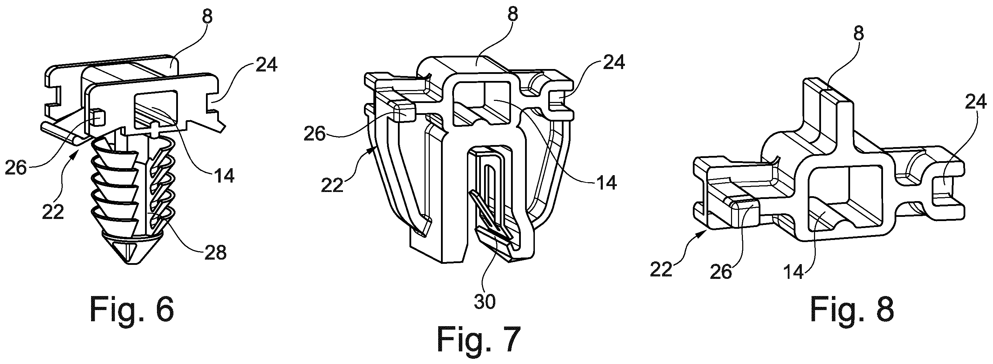

Fig. 6 shows a component 8. The component 8 is configured to be affixed to a hole. Therefore, the component 8 comprises a pin 28.

Fig. 7 shows another component 8. The component is configured to be affixed to a plate. The component 8 comprises a clamp 30.

Fig. 8 shows a component 8, which is a spacer 8. The spacer 8 is configured to be arranged in between at least two components 8. The spacer 8 is configured to bridge a gap between at least two elements.

## Claims

1. Modular system (2) for affixing at least one element to a vehicle and/or for affixing the modular system (2) to the vehicle, comprising:
a threading element (4),
a stop element (6),
at least one component (8) configured to affix the at least one element to a vehicle and/or configured to affix the modular system (2) to the vehicle,
wherein the threading element (4) comprises a strip (10) and a limiting element (12),
wherein the at least one component (8) is configured to be attached to the strip (10) in an assembled state,
wherein the limiting element (12) is configured to be attached to the strip (10) in the assembled state,
wherein the at least one component (8) is configured to be clamped between the limiting element (12) and the stop element (6) in the assembled state, **characterized in that**
the at least one component (8) comprises at least one stabilisation system (22) configured to stabilize numerous components (8) in the assembled state, wherein the at least one stabilisation system (22) comprises at least one female plug (24) and at least one male plug (26).

2. Modular system according to claim 1,
**characterized in that**
the at least one component (8) is stringed onto the strip (10) and/or the stop element (6) is stringed onto the strip (10).

3. Modular system according to claim 1 or 2,
**characterized in that**
the at least one component (8) comprises an opening (14) to string through the strip (10) and/or the stop element (6) comprises an opening (14) to string through the strip (10).

4. Modular system according to any one of claims 1 to 3,
**characterized in that**
the strip (10) comprises at least one elevation (16) and the stop element (6) comprises a locking element (18),
wherein the locking element (18) is configured to permit a movement of the stop element (6) over the at least one elevation (16) in a first direction along the longitudinal axis (A) of the strip (10),
wherein the locking element (18) is configured to prevent a movement of the stop element (6) over the at least one elevation (16) in a direction opposite to the first direction along the longitudinal axis of the strip (10).

5. Modular system according to any one of claims 1 to 4,
**characterized in that**
the threading element (4) and the stop element (6) form a cable tie.

6. Modular system according to any one of claims 1 to 5,
**characterized in that**
the stop element (6) comprises at least one tension element (20),
wherein the at least one tension element (20) is configured to apply a pressure to the at least one component (8) in the assembled state.

7. Modular system according to claim 6,
**characterized in that**
the at least one tension element (20) and the stop element (6) are monolithic.

8. Modular system according to any one of claims 1 to 7,
**characterized in that**
the at least one female plug (24) and the at least one male plug (26) are arranged on opposite sides of the at least one component (8).

9. Modular system according to any one of claims 1 to 8,
**characterized in that**
the threading element (4) comprises glass fibres.

10. Method for assembling a modular system (2) for affixing at least one element to a vehicle and/or for affixing the modular system (2) to the vehicle, in particular a modular system (2) according to any one of claims 1 to 9, comprising the steps:
- providing a threading element (4), wherein the threading element (4) comprises a strip (10) and a limiting element (12)
- providing at least one component (8) for affixing at least one element to a vehicle and/or for affixing the modular system (2) to the vehicle,
- attaching the at least one component (8) comprising at least one stabilization system (22) configured to stabilize numerous components (8) in the assembled state to the strip, the stabilization system comprising at least one female plug (24) and at least one male plug (26),
- providing a stop element (6),
- attaching the limiting element (12) to the strip,
- clamping the at least one component (8) between the limiting element (12) and the stop element (6).

11. Use of a modular system (2) according to any one of claims 1 to 9 for affixing at least one element to a vehicle and/or for affixing the modular system (2) to the vehicle, in particular of tubes of a brake system, a fuel system and/or a thermal management system.

## Patentansprüche

1. Modulares System (2) zum Befestigen mindestens eines Elements an einem Fahrzeug und/oder zum Befestigen des modularen Systems (2) an dem Fahrzeug, umfassend:
ein Auffädelelement (4),
ein Anschlagelement (6),
mindestens eine Komponente (8), die dazu konfiguriert ist, das mindestens eine Element an einem Fahrzeug zu befestigen, und/oder dazu konfiguriert ist, das modulare System (2) an dem Fahrzeug zu befestigen,
wobei das Auffädelelement (4) einen Streifen (10) und ein Begrenzungselement (12) umfasst,
wobei die mindestens eine Komponente (8) dazu konfiguriert ist, in einem zusammengebauten Zustand an dem Streifen (10) angebracht zu sein,
wobei das Begrenzungselement (12) dazu konfiguriert ist, in dem zusammengebauten Zustand an dem Streifen (10) angebracht zu sein,
wobei die mindestens eine Komponente (8) dazu konfiguriert ist, in dem zusammengebauten Zustand zwischen das Begrenzungselement (12) und das Anschlagelement (6) geklemmt zu sein, **dadurch gekennzeichnet, dass**
die mindestens eine Komponente (8) mindestens ein Stabilisierungssystem (22) umfasst, das dazu konfiguriert ist, zahlreiche Komponenten (8) in dem zusammengebauten Zustand zu stabilisieren, wobei das mindestens eine Stabilisierungssystem (22) mindestens eine Steckaufnahme (24) und mindestens einen Steckzapfen (26) umfasst.

2. Modulares System nach Anspruch 1,
**dadurch gekennzeichnet, dass**
die mindestens eine Komponente (8) auf den Streifen (10) aufgezogen ist und/oder das Anschlagelement (6) auf den Streifen (10) aufgezogen ist.

3. Modulares System nach Anspruch 1 oder 2,
**dadurch gekennzeichnet, dass**
die mindestens eine Komponente (8) eine Öffnung (14) zum Durchziehen des Streifens (10) umfasst und/oder das Anschlagelement (6) eine Öffnung (14) zum Durchziehen des Streifens (10) umfasst.

4. Modulares System nach einem der Ansprüche 1 bis 3,
**dadurch gekennzeichnet, dass**
der Streifen (10) mindestens eine Erhebung (16) umfasst und das Anschlagelement (6) ein Sperrelement (18) umfasst,
wobei das Sperrelement (18) dazu konfiguriert ist, eine Bewegung des Anschlagelements (6) über die mindestens eine Erhebung (16) in eine erste Richtung entlang der Längsachse (A) des Streifens (10) zuzulassen,
wobei das Sperrelement (18) dazu konfiguriert ist, eine Bewegung des Anschlagelements (6) über die mindestens eine Erhebung (16) in eine Richtung entgegengesetzt zu der ersten Richtung entlang der Längsachse des Streifens (10) zu verhindern.

5. Modulares System nach einem der Ansprüche 1 bis 4,
**dadurch gekennzeichnet, dass**
das Auffädelelement (4) und das Anschlagelement (6) einen Kabelbinder ausbilden.

6. Modulares System nach einem der Ansprüche 1 bis 5,
**dadurch gekennzeichnet, dass**
das Anschlagelement (6) mindestens ein Spannelement (20) umfasst,
wobei das mindestens eine Spannelement (20) dazu konfiguriert ist, in dem zusammengebauten Zustand einen Druck auf die mindestens eine Komponente (8) auszuüben.

7. Modulares System nach Anspruch 6,
**dadurch gekennzeichnet, dass**
das mindestens eine Spannelement (20) und das Anschlagelement (6) monolithisch sind.

8. Modulares System nach einem der Ansprüche 1 bis 7,
**dadurch gekennzeichnet, dass**
die mindestens eine Steckaufnahme (24) und der mindestens eine Steckzapfen (26) auf gegenüberliegenden Seiten der mindestens einen Komponente (8) angeordnet sind.

9. Modulares System nach einem der Ansprüche 1 bis 8,
**dadurch gekennzeichnet, dass**
das Auffädelelement (4) Glasfasern umfasst.

10. Verfahren zum Zusammenbauen eines modularen Systems (2) zum Befestigen mindestens eines Elements an einem Fahrzeug und/oder zum Befestigen des modularen Systems (2) an dem Fahrzeug, insbesondere eines modularen Systems (2) nach einem der Ansprüche 1 bis 9, umfassend die folgenden Schritte:
- Bereitstellen eines Auffädelelements (4), wobei das Auffädelelement (4) einen Streifen (10) und ein Begrenzungselement (12) umfasst,
- Bereitstellen mindestens einer Komponente (8) zum Befestigen mindestens eines Elements an einem Fahrzeug und/oder zum Befestigen des modularen Systems (2) an dem Fahrzeug,
- Anbringen der mindestens einen Komponente (8), die mindestens ein Stabilisierungssystem (22) umfasst, das dazu konfiguriert ist, zahlreiche Komponenten (8) in dem zusammengebauten Zustand an dem Streifen zu stabilisieren, wobei das Stabilisierungssystem mindestens eine Steckaufnahme (24) und mindestens einen Steckzapfen (26) umfasst,
- Bereitstellen eines Anschlagelements (6),
- Anbringen des Begrenzungselements (12) an dem Streifen,
- Klemmen der mindestens einen Komponente (8) zwischen das Begrenzungselement (12) und das Anschlagelement (6).

11. Verwendung eines modularen Systems (2) nach einem der Ansprüche 1 bis 9 zum Befestigen mindestens eines Elements an einem Fahrzeug und/oder zum Befestigen des modularen Systems (2) an dem Fahrzeug, insbesondere von Rohrleitungen eines Bremssystems, eines Kraftstoffsystems und/oder eines Wärmemanagementsystems.

## Revendications

1. Système modulaire (2) pour fixer au moins un élément à un véhicule et/ou pour fixer le système modulaire (2) au véhicule, comprenant :
un élément de filetage (4),
un élément de butée (6),
au moins un composant (8) conçu pour fixer l'au moins un élément à un véhicule et/ou conçu pour fixer le système modulaire (2) au véhicule,
dans lequel l'élément de filetage (4) comprend une bande (10) et un élément de limitation (12),
dans lequel l'au moins un composant (8) est conçu pour être attaché à la bande (10) dans un état assemblé,
dans lequel l'élément de limitation (12) est conçu pour être attaché à la bande (10) dans l'état assemblé,
dans lequel l'au moins un composant (8) est conçu pour être serré entre l'élément de limitation (12) et l'élément de butée (6) à l'état assemblé,
**caractérisé en ce que**
l'au moins un composant (8) comprend au moins un système de stabilisation (22) conçu pour stabiliser de nombreux composants (8) dans l'état assemblé, dans lequel l'au moins un système de stabilisation (22) comprend au moins une prise femelle (24) et au moins une prise mâle (26).

2. Système modulaire selon la revendication 1,
**caractérisé en ce que**
l'au moins un composant (8) est enfilé sur la bande (10) et/ou l'élément de butée (6) est enfilé sur la bande (10).

3. Système modulaire selon la revendication 1 ou la revendication 2,
**caractérisé en ce que**
l'au moins un composant (8) comprend une ouverture (14) à travers laquelle enfiler la bande (10) et/ou l'élément de butée (6) comprend une ouverture (14) à travers laquelle enfiler la bande (10).

4. Système modulaire selon l'une quelconque des revendications 1 à 3,
**caractérisé en ce que**
la bande (10) comprend au moins une élévation (16) et l'élément de butée (6) comprend un élément de verrouillage (18),
dans lequel l'élément de verrouillage (18) est conçu pour permettre un mouvement de l'élément de butée (6) sur l'au moins une élévation (16) dans une première direction le long de l'axe longitudinal (A) de la bande (10),
dans lequel l'élément de verrouillage (18) est conçu pour empêcher un mouvement de l'élément de butée (6) sur l'au moins une élévation (16) dans une direction opposée à la première direction le long de l'axe longitudinal de la bande (10).

5. Système modulaire selon l'une quelconque des revendications 1 à 4,
**caractérisé en ce que**
l'élément de filetage (4) et l'élément de butée (6) forment un collier de serrage.

6. Système modulaire selon l'une quelconque des revendications 1 à 5,
**caractérisé en ce que**
l'élément de butée (6) comprend au moins un élément de tension (20),
dans lequel l'au moins un élément de tension (20) est conçu pour appliquer une pression à l'au moins un composant (8) dans l'état assemblé.

7. Système modulaire selon la revendication 6,
**caractérisé en ce que**
l'au moins un élément de tension (20) et l'élément de butée (6) sont monolithiques.

8. Système modulaire selon l'une quelconque des revendications 1 à 7,
**caractérisé en ce que**
l'au moins une prise femelle (24) et l'au moins une prise mâle (26) sont agencées de côtés opposés de l'au moins un composant (8).

9. Système modulaire selon l'une quelconque des revendications 1 à 8,
**caractérisé en ce que**
l'élément de filetage (4) comprend des fibres de verre.

10. Procédé d'assemblage d'un système modulaire (2) pour fixer au moins un élément à un véhicule et/ou pour fixer le système modulaire (2) au véhicule, en particulier un système modulaire (2) selon l'une quelconque des revendications 1 à 9, comprenant les étapes suivantes :
- fourniture d'un élément de filetage (4), dans lequel l'élément de filetage (4) comprend une bande (10) et un élément de limitation (12)
- fourniture d'au moins un composant (8) pour fixer au moins un élément à un véhicule et/ou pour fixer le système modulaire (2) au véhicule,
- attache de l'au moins un composant (8) comprenant au moins un système de stabilisation (22) conçu pour stabiliser de nombreux composants (8) dans l'état assemblé à la bande, le système de stabilisation comprenant au moins une prise femelle (24) et au moins une prise mâle (26),
- fourniture d'un élément de butée (6),
- attache de l'élément de limitation (12) à la bande,
- serrage de l'au moins un composant (8) entre l'élément de limitation (12) et l'élément de butée (6).

11. Utilisation d'un système modulaire (2) selon l'une quelconque des revendications 1 à 9 pour fixer au moins un élément à un véhicule et/ou pour fixer le système modulaire (2) au véhicule, en particulier de tubes d'un système de freinage, d'un système de carburant et/ou d'un système de gestion thermique.
